# EUROPÄISCHE PATENTSCHRIFT

(11) **EP 1 073 881 B1**
(45) Veröffentlichungstag und Bekanntmachung des Hinweises auf die Patenterteilung: **20.03.2002**
(21) Anmeldenummer: 99924769.5
(22) Anmeldetag: 01.04.1999
(51) Int. Cl.: G01D 3/08, G06F 1/26, B60R 16/02

(54) **EINRICHTUNG ZUM RATIOMETRISCHEN MESSEN VON SENSORSIGNALEN**
DEVICE FOR RADIOMETRIC SENSOR SIGNAL MEASUREMENT
DISPOSITIF DE MESURE RADIOMETRIQUE DE SIGNAUX EMIS PAR DES DETECTEURS

(30) Priorität: 23.04.1998 DE 19818309
(43) Veröffentlichungstag der Anmeldung: 07.02.2001
(73) Patentinhaber: SIEMENS AKTIENGESELLSCHAFT, 80333 München (DE)
(72) Erfinder: BOLZ, Stephan, D-93102 Pfatter (DE)
(86) Internationale Anmeldenummer: DE9901019
(87) Internationale Veröffentlichungsnummer: WO9956085

(56) Entgegenhaltungen:
- DE-C- 19 636 838
- US-A- 5 515 048
- PATENT ABSTRACTS OF JAPAN vol. 095, no. 002, 31. März 1995 (1995-03-31) & JP 06 318138 A (HONDA MOTOR CO LTD), 15. November 1994 (1994-11-15)

## Beschreibung

Die Erfindung betrifft eine Einrichtung zum ratiometrischen Messen von Sensorsignalen nach dem Oberbegriff von Anspruch 1.

Die Anforderungen an die Meßgenauigkeit von Sensoren in der Kraftfahrzeugelektronik werden immer höher. Viele Meßwerte werden als analoge Gleichspannungen Vmeß (0...5V ö 0...100%) vom Sensor zum verarbeitenden Mikrocontroller übertragen. Dort werden sie mittels eines Analog/Digital-Konverters ADC digitalisiert (z.B. 10Bit-ADC: 0...5V ö 0...1023 Schritte). Bei einem Analog/Digital-Konverter wird der zu wandelnde Meßwert Vmeß in Bezug zu einem Referenzwert VAref gesetzt, welcher dem Analog/Digital-Konverter ADC als analoge Referenzspannung zugeführt wird. Für eine möglichst genaue Umwandlung des Analogwertes in einen Digitalwert ist es deshalb wünschenswert, daß Sensor S und Analog/Digital-Konverter ADC die gleiche Referenzspannung verwenden.

In der Kraftfahrzeugelektronik ist dies in der Regel nicht möglich, da als Referenzspannung VAref für den im Mikrocontroller µC integrierten Analog/Digital-Konverter ADC die Versorgungsspannung V5int des Mikrocontrollers µC verwendet wird (VAref = V5int). Da aber im Falle eines Kurzschlusses der Sensor-Referenzspannung V5ext nach Masse oder Batterie der Mikrocontroller und damit das Motor-/Getriebe-Steuergerät betriebsfähig bleiben muß, darf die Versorgungsspannung V5int nicht auf den Fahrzeug-Kabelbaum geführt werden.

Üblicherweise wird deshalb als Referenzspannung V5ext für den Sensor S eine eigene, von der Versorgungsspannung V5int des Mikrocontrollers unabhängige Spannungsversorgung verwendet.

Die Bezeichnung V5int bedeutet dabei die interne 5Volt-Versorgungsspannung des Mikrocontrollers µC, V5ext hingegen die 5Volt- Referenzspannung für den oder die extern vom Motorsteuergerät ST angeordneten Sensor/en S. Die Versorgungsspannung für Mikrocontroller und Sensoren beträgt üblicherweise 5V.

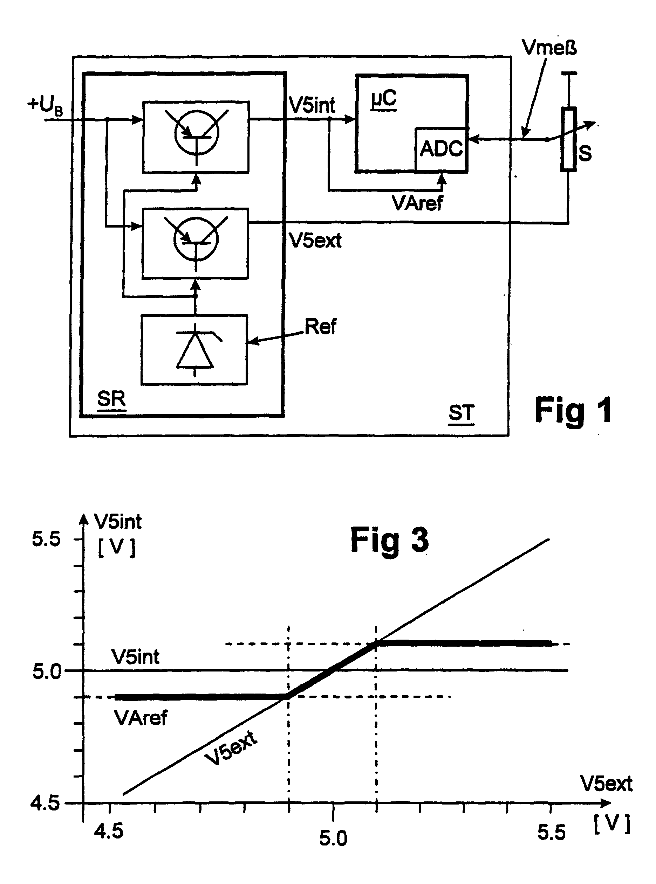

In der Regel wird ein Spannungsregler SR mit mehreren voneinander unabhängigen Ausgängen - V5int, V5ext - und einer gemeinsamen Referenz Ref verwendet, siehe Figur 1. Die dabei mögliche Abweichung voneinander (Tracking-Fehler des Reglers) beträgt typisch V5int - V5ext = ±50...100mV. Dieser Fehler (1...2%) stellt bei Sensoren wie beispielsweise Luftmassenmessern bereits einen wesentlichen Anteil am gesamten Fehlerbudget dar.

Es ist deshalb Aufgabe der Erfindung, eine Einrichtung zum Messen von Sensorsignalen zu schaffen, mittels welcher dieser Tracking-Fehler eliminiert oder minimiert werden kann.

Diese Aufgabe wird erfindungsgemäß durch eine Einrichtung mit den Merkmalen gemäß Anspruch 1 gelöst.

Bei der erfindungsgemäßen Einrichtung wird die Referenzspannung VAref für den Analog/Digital-Konverter ADC von der Versorgungsspannung V5int des Mikrocontrollers µC getrennt. Sie folgt - in einem gewissen Bereich um die Versorgungsspannung V5int - der Sensor-Referenzspannung V5ext, so daß in diesem Bereich der Tracking-Fehler weitgehend eliminiert wird. Dieser Bereich ist durch die maximal zulässige Differenz zwischen der Referenzspannung VAref des Analog/Digital-Konverters ADC und der Versorgungsspannung V5int des Mikrocontrollers µC definiert; sie beträgt bei einem typischen, in der Automobilelektronik verwendeten Mikrocontroller beispielsweise ±100 mV.

Ein Ausführungsbeispiel nach der Erfindung wird nachstehend anhand einer schematischen Zeichnung näher erläutert. In der Zeichnung zeigen:
- Figur 1:: eine bisher verwendete Schaltung zum Messen von Sensorsignalen,
- Figur 2:: eine erfindungsgemäße Schaltung, und
- Figur 3:: ein Diagramm über den Verlauf der verwendeten Spannungen V5int, V5ext und VAref.

Figur 1 zeigt in einer bisher verwendeten Schaltung ein als Kasten angedeutetes Motorsteuergerät ST einer nicht dargestellten Kraftfahrzeug-Brennkraftmaschine, mit einem bereits erwähnten Spannungsregler SR, welcher mit der Batteriespannung +U_{B} betrieben wird, mit zwei voneinander unabhängigen Ausgängen für die Spannungen V5int und V5ext und einer gemeinsamen Referenz Ref. Die Spannung V5int dient als Versorgungsspannung eines Mikrocontrollers µC und gleichzeitig als Referenzspannung VAref eines im Mikrocontroller µC integrierten Analog/Digital-Konverters ADC, dem das Ausgangssignal Vmeß eines als Potentiometer ausgebildeten, extern vom Steuergerät ST angeordneten Sensors S zur ratiometrischen A/D-Wandlung zugeführt wird. Der Sensor S erhält als Referenzspannung V5ext die zweite Ausgangsspannung des Spannungsreglers SR. Diese Schaltung weist, wie bereits beschrieben, einen Tracking-Fehler zwischen V5int und V5ext von typisch ±50...100mV auf.

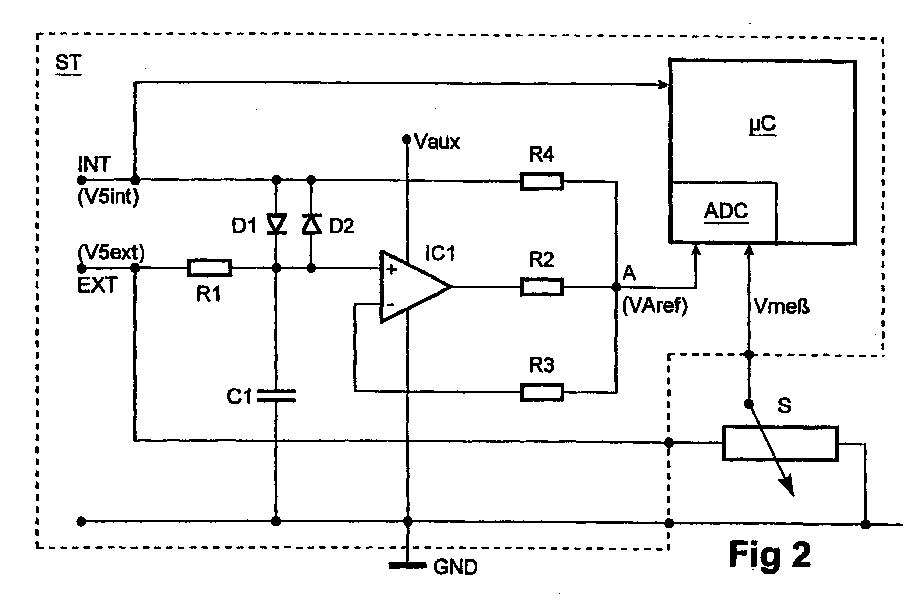

Figur 2 zeigt eine erfindungsgemäße Schaltung, welche diesen Tracking-Fehler in einem bestimmten Spannungsbereich eliminiert.

Das Motorsteuergerät ST ist strichliert angedeutet, der in Figur 1 gezeigte Spannungsregler SR ist zwar im Motorsteuergerät ST nach Figur 2 ebenfalls vorhanden; hier sind der Übersichtlichkeit wegen jedoch nur seine beiden Spannungsausgänge als Eingänge der nachfolgenden Schaltung dargestellt: INT für die Versorgungsspannung VSint internen des Mikrocontrollers µC, und EXT für die Referenzspannung V5ext des externen Sensors S.

Für die Bildung der Referenzspannung VAref des Analog/Digital-Konverters ADC ist ein als Spannungsfolger mit Verstärkungsfaktor +1 geschalteter Operationsverstärker IC1 vorgesehen, der durch eine aus der Fahrzeugbatterie gewonnene Spannung Vaux versorgt wird. Sein nicht invertierender Eingang "+" ist über einen Widerstand R1 mit dem Spannungseingang EXT verbunden. Der Widerstand R1 dient als Schutz des Operationsverstärkers IC1 gegen mögliche Störspannungen, die der Spannung V5ext überlagert sein können.

Der nicht invertierende Eingang "+" ist einerseits über einen Kondensator C1 mit dem Masseanschluß GND des Steuergeräts ST verbunden. Der Kondensator C1 bildet zusammen mit dem Widerstand R1 einen zusätzlichen Tiefpaß zum Filtern, höherfrequenter Störungen. Der nicht invertierende Eingang "+" ist andererseits über zwei antiparallel geschaltete Dioden D1, D2 mit dem Spannungseingang INT verbunden, wodurch die am nicht invertierenden Eingang "+" anliegende Spannung (V5ext) zusätzlich auf einen Spannungsbereich V5int ± 0.7V begrenzt wird.

Der Ausgang des Operationsverstärkers IC1 ist mit dem Spannungseingang INT über einen aus Widerständen R2 und R4 gebildeten Spannungsteiler verbunden, dessen Abgriff A über einen Widerstand R3 mit dem invertierenden Eingang "-" des Operationsverstärkers IC1 verbunden ist. An diesem Abgriff A steht die Referenzspannung VAref zur Verfügung, die zusammen mit der am Sensor S abgegriffenen Meßspannung Vmeß dem Analog/Digital-Konverter ADC zugeführt wird.

Der nachstehend beschriebenen Arbeitsweise dieser Schaltung sind die unten angegebenen Spannungen und Bauteilewerte zugrundegelegt.

Der Spannungsbereich am Ausgang des Operationsverstärkers IC1 beträgt bei der angenommenen Versorgungsspannung von Vaux = 10V etwa 0.4V bis 9.1V. Bedingt durch die Rückkopplung über den Widerstand R3 versucht der Operationsverstärker IC1 die Spannungsdifferenz zwischen seinen Eingängen zu eliminieren, d.h., die Spannung VAref, die auch am invertierenden Eingang anliegt, der am nicht invertierenden Eingang anliegenden Spannung V5ext nachzuführen.

Hat beispielsweise gegenüber der Versorgungsspannung V5int, die genau 5V betragen soll, die Referenzspannung V5ext einen Tracking-Fehler von -100mV, d.h., V5ext = 4,9V, (vgl. Figur 3, in welcher die Spannungsverläufe von V5int/ V5ext und VAref aufgetragen sind) so müssen diese 100mV am Widerstand R4 abfallen, damit die Referenzspannung VAref am Abgriff A des Spannungsteilers R4/R2 gleich der Referenzspannung V5ext wird. Dann muß aber am Widerstand R2 wegen des Spannungsteilungsverhältnisses R2/R4 (20kΩ/0.5kΩ = 40) eine Spannung von 40*100mV = 4V abfallen, d.h., der Ausgang des Operationsverstärkers IC1 wird auf einen Spannungswert von 0.9V eingestellt.

Durch den Spannungsteiler und seine Anbindung an die Versorgungsspannung V5int über den Eingang INT ergibt sich bei den unten genannten Bauteilewerten für die Referenzspannung VAref ein Bereich von etwa VAref = V5int(=5V) ± 100mV. In diesem Bereich sind die beiden Spannungen V5ext und VAref gleich groß: VAref ≡ V5ext; eine ratiometrische Messung in diesem Bereich ist demnach gewährleistet. Ein möglicher Fehler ist noch durch die Offsetspannung des Operationsverstärkers IC1 gegeben, die je nach verwendetem Typ etwa ± 1...10mV betragen kann. Dieser Fehler ist jedoch eine Größenordnung kleiner als der Tracking-Fehler bisheriger Lösungen (±100mV um V5int).

Wird die Referenzspannung V5ext kleiner als 4.9V oder größer als 5.1V, so bleibt VAref auf etwa 4.9V oder 5.1V konstant, wie in Figur 3 dargestellt, da in diesem Fall der Operationsverstärkerausgang bereits seinen unteren oder oberen Grenzwert erreicht hat und sich wegen des Spannungsteilungsverhältnisses R2/R4 kein kleinerer oder größerer Wert für VAref einstellen kann.

In einem bevorzugten Ausführungsbeispiel nach Figur 2 werden folgende Bauteile bzw. Spannungen verwendet:

| | | |
|---|---|---|
| D1, D2: D1N4148 | R1: 10kΩ | V5int: 5V |
| C1: 1nF | R2: 20kΩ | V5ext: 5V |
| IC1: LM324 | R3: 10kΩ R4: 0.5Ω | Vaux: 10V |

## Patentansprüche

1. Einrichtung zum ratiometrischen Messen von Sensorsignalen, mit einem Sensor (S), dessen analoges Ausgangssignal (Vmeß) einem Analog/Digital-Konverter (ADC)zugeführt wird, und mit einem Spannungsregler (SR), welcher eine Versorgungsspannung (V5int) für den Analog/Digital-Konverter (ADC) und unabhängig davon eine Referenzspannung (V5ext) für den Sensor (S) bereitstellt,
**dadurch gekennzeichnet,**
**daß** zur Bildung einer für den Analog/Digital-Konverter (ADC) benötigten Referenzspannung (VAref) ein als Spannungsfolger beschalteter Operationsverstärker (IC1) vorgesehen ist,
dessen nicht invertierendem Eingang (+) über einen Widerstand (R1) die Referenzspannung (V5ext) für den Sensor (S) zugeführt wird, und dessen Ausgang über einen Spannungsteiler (R2, R4) mit dem Eingang (INT) für die Versorgungsspannung (V5int) verbunden ist,
**daß** der Spannungsabgriff (A) des Spannungsteilers (R2, R4) über einen Widerstand (R3) auf den invertierenden Eingang (-) des Operationsverstärkers (IC1) rückgekoppelt ist, und
**daß** am Spannungsabgriff (A) des Spannungsteilers (R2, R4) die Referenzspannung (VAref) für den Analog/Digital-Konverter (ADC) abgreifbar ist.

2. Einrichtung nach Anspruch 1, **dadurch gekennzeichnet, daß** vor den nicht invertierenden Eingang (+) des Operationsverstärkers (IC1) ein Tiefpaß (R1, C1) geschaltet ist.

3. Einrichtung nach Anspruch 1, **dadurch gekennzeichnet, daß** der nichtinvertierende Eingang (+) des Operationsverstärkers (IC1) über zwei antiparallel geschaltete Dioden (D1, D2) mit dem Eingang (INT) für die Versorgungsspannung (V5int) verbunden ist.

## Claims

1. Device for ratiometric measurement of sensor signals, with a sensor (S) whose analogue output signal (Vmeß) is supplied to an analogue/digital converter (ADC), and with a voltage regulator (SR) which provides a supply voltage (V5int) for the analogue/digital converter (ADC) and independently of this a reference voltage (V5ext) for the sensor (S), **characterised in that** a connected operational amplifier (IC1) is provided as an isolation amplifier in order to create a reference voltage (VAref) required for the analogue/digital converter (ADC),
to whose non-inverting input (+) the reference voltage (V5ext) for the sensor (S) is supplied via a resistor (R1), and whose output is connected to the input (INT) for the supply voltage (V5int) via a voltage divider (R2, R4),
that the voltage pick-off (A) of the voltage divider (R2, R4) is fed back to the inverting input (-) of the operational amplifier (IC1) via a resistor (R3), and
that the reference voltage (VAref) for the analogue/digital converter (ADC) can be picked off at the voltage pick-off (A) of the voltage divider (R2, R4).

2. Device according to Claim 1, **characterised in that** a low-pass filter (R1, C1) is connected upstream of the non-inverting input (+) of the operational amplifier (IC1).

3. Device according to Claim 1, **characterised in that** the non-inverting input (+) of the operational amplifier (IC1) is connected to the input (INT) for the supply voltage (V5int) via two antiparallel connected diodes (D1, D2).

## Revendications

1. Dispositif pour la mesure ratiométrique de signaux de capteurs, comprenant un capteur (S) dont le signal de sortie analogique (Vmess) est transmis à un convertisseur analogique/numérique (ADC), et un régulateur de tension (5R) qui prépare une tension d'alimentation (V5int) pour le convertisseur analogique/numérique (ADC) et, indépendamment de cette tension, une tension de référence (V5ext) pour le capteur (S)
**caractérisé**
**en ce que**, pour la formation d'une tension de référence (VAref) nécessaire pour le convertisseur analogique/numérique (ADC), il est prévu un amplificateur opérationnel (IC1) monté en suiveur de tension,
à l'entrée non inverseuse (+) duquel la tension de référence (V5ext) pour le capteur (S) est appliquée à travers une résistance (R1) et dont la sortie est connectée à travers un diviseur de tension (R2, R4) à l'entrée (INT) pour la tension d'alimentation (V5int),
**en ce que** la prise de tension (A) du diviseur de tension (R2, R4) est transmise en réaction à l'entrée inverseuse (-) de l'amplificateur opérationnel (IC1) à travers une résistance (R3) et
**en ce que**, sur la prise de tension (A) du diviseur de tension (R2, R4), on peut prendre la tension de référence (VAref) pour le convertisseur analogique/numérique (ADC).

2. Dispositif selon la revendication 1, **caractérisé en ce qu'**un passe-bas (R1, C1) est monté en amont de l'entrée non inverseuse (+) de l'amplificateur opérationnel (IC1).

3. Dispositif selon la revendication 1, **caractérisé en ce que** l'entrée non inverseuse (+) de l'amplificateur opérationnel (IC1) est connectée, à l'entrée (INT) de la tension d'alimentation (V5int) à travers deux diodes (D1, D2) montées en antiparallèle.
